(19) Europäisches Patentamt
European Patent Office
Office européen des brevets

(11) EP 0 753 967 A2

(12) **EUROPÄISCHE PATENTANMELDUNG**

(43) Veröffentlichungstag:
15.01.1997 Patentblatt 1997/03

(51) Int. Cl.⁶: **H04N 7/24**

(21) Anmeldenummer: 96109755.7

(22) Anmeldetag: 17.06.1996

(84) Benannte Vertragsstaaten:
**DE ES FR GB IT**

(30) Priorität: **14.07.1995 DE 19525721**

(71) Anmelder: **SIEMENS AKTIENGESELLSCHAFT**
**80333 München (DE)**

(72) Erfinder:
• **Mende, Manfred, Dipl.-Ing.**
**82008 Unterhaching (DE)**
• **Karsten, Müller, Dipl.-Ing.**
**81373 München (DE)**
• **Graf von Reventlow, Christian, Dr.-Ing.**
**80469 München (DE)**
• **Prange, Stefan, Dr.-Ing.**
**81476 München (DE)**

(54) **Verfahren und Schaltungsanordnung zur Decodierung eines Videodatenstroms**

(57) Bei einem Verfahren zur Decodierung eines beispielsweise nach MPEG2 transformationscodierten Videodatenstroms werden dezimierte Bilder erzeugt, um eine gleichzeitige Darstellung mehrerer Bilder an einem Bildschirm zu ermöglichen. Zur Vermeidung von Störeffekten wird vor der Transformationsdecodierung, beispielsweise einer inversen diskreten Kosinustransformation, eine Filterung durchgeführt, die auf die Videobildinformation mit einer Tiefpaßcharakteristik wirkt. Der Rechenaufwand für die Transformationsdecodierung wird dadurch wesentlich verringert.

FIG.

EP 0 753 967 A2

**Beschreibung**

Die Erfindung betrifft ein Verfahren zur Decodierung eines Videodatenstroms, dessen Videodaten mit einer Transformationscodierung codiert sind. Die Erfindung betrifft außerdem eine Schaltungsanordnung zur Durchführung des Verfahrens.

Standards zur Komprimierung von Videodaten, beispielsweise nach dem sogenannten MPEG2-Standard (ISO/IEC 13818-2), verwenden das Prinzip einer Transformationscodierung. Sogenannte I-Bilder (Intracodierte Bilder) sind transformationscodiert. Als Transformation wird eine diskrete Kosinustransformation (DCT) verwendet. Darüber hinaus sind im Datenstrom P-Bilder (Prädizierte Bilder) und B-Bilder (Bidirektional prädizierte Bilder) vorhanden. Empfängerseitig wird durch eine inverse Transformation sowie eine uni- und bidirektionale Prädiktion die Folge der Ausgangsbilder für eine Weiterverarbeitung im Gerät, beispielsweise zur Darstellung an einem Bildschirm, zurückgewonnen.

Ein Beispiel für den prinzipiellen Aufbau eines Decoders in einer Empfangseinrichtung ist in der Literaturstelle Fernseh- und Kino-Technik, "MPEG-2-Bild-Codierung für das digitale Fernsehen", J. De Lameillieure, R. Schäfer, Nr. 3/1994, Seiten 99 bis 107 beschrieben. Prinzipiell enthält der Decoder einen Pufferspeicher, eine Bitstromdecodierungseinrichtung (Parser), durch die Bewegungsinformation abgetrennt wird, eine Dequantisierungseinrichtung, eine Einrichtung zur Berechnung einer inversen diskreten Kosinustransformation (IDCT) und nachfolgend eine Bildsyntheseeinrichtung, aus der die Bilder mittels einer bewegungskompensierten Prädiktion wieder zusammengesetzt werden. In der praktischen Realisierung werden die von der IDCT ausgegebenen transformationsdedecodierten I- und P-Bilder in einer Speichereinrichtung zwischengespeichert und zur Pädikation weiterer P- und B-Bilder unter Einbeziehung der abgetrennten Bewegungsinformation verwendet. Zur Anpassung an übliche Darstellungsstandards kann mittels einer weiteren Speichereinrichtung eine Formatanpassung, beispielsweise eine Vollbild/Halbbild-Umsetzung, durchgeführt werden.

In der Literaturstelle Rundfunktechnische Mitteilungen, 1992, Heft 5, Seiten 196 bis 205 ist ein anderer Decoder für den Empfang von digitalen Videosignalen beschrieben. Die Videodaten sind mittels einer Transformationscodierung, einer diskreten Kosinustransformation, codiert. Sie werden empfängerseitig einer inversen Transformationscodierung unterzogen und zur Bewegungskompensation in einem Bildpufferspeicher zwischengespeichert.

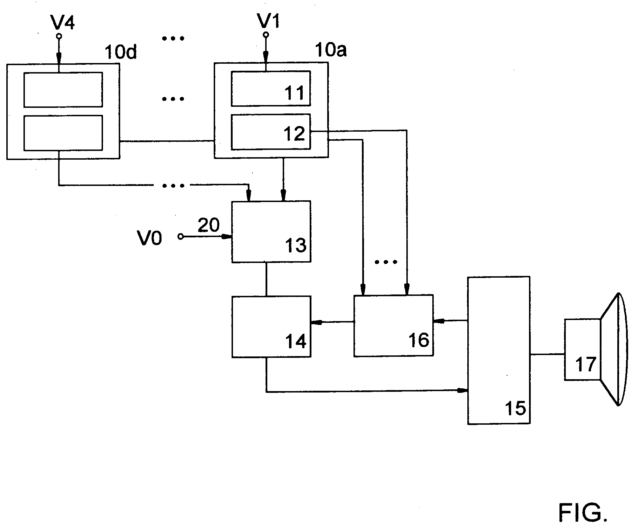

In der Literaturstelle Proceedings of the IEEE, Band 69, Nr. 3, März 1981, Seiten 349 - 389 sind im wesentlichen theoretische Grundlagen zur Kompression und Dekompression von Bilddaten beschrieben. Insbesondere in Figur 31 ist gezeigt, vor der Decodierung eines zweidimensionalen Bildes eine Filterung durchzuführen. Zur Decodierung wird vorzugsweise eine Sinus- oder Kosinustransformation vorgeschlagen. Auf Seite 364 wird angegeben, daß sich die maximale durchschnittliche Energie in nur einigen Koeffizienten des codierten Signales vorliegt.

In heutigen Fernsehgeräten ist die Funktion der gleichzeitigen Darstellung mehrerer fortlaufend bewegter Bilder verschiedener Programme an einem Bildschirm wünschenswert. Sind beispielsweise vier Bewegtbilder gleichzeitig am Bildschirm darzustellen, erfordert dies die parallele Decodierung der vier Videobildfolgen und in entsprechender Weise den vierfachen oben beschriebenen Schaltungsaufwand. Dabei werden die Bilder mit voller Auflösung decodiert und erst anschließend auf die einzublendende Bildgröße dezimiert, d. h. in ihrer Bildpunktanzahl verringert. Praktischerweise sind zur Decodierung pro Videobildkanal ungefähr 16 Mbit notwendig sowie eine relativ hohe Rechenleistung in der Einrichtung zur Durchführung der IDCT, insbesondere eine hohe Anzahl von Multiplikationsoperationen.

Die Aufgabe der Erfindung besteht darin, ein Verfahren zur Decodierung von transformationscodierten Videodaten anzugeben, das für eine gleichzeitige Darstellung mehrerer Videobilder an einem Bildschirm geeignet ist und mit möglichst geringem Aufwand realisierbar ist. Eine weitere Aufgabe besteht in der Angabe einer Schaltungsanordnung zur Durchführung des Verfahrens.

Erfindungsgemäß wird die Aufgabe betreffend das Verfahren durch die Merkmale des Patentanspruchs 1 gelöst.

Eine Schaltungsanordnung zur Durchführung des Verfahrens ist in Patentanspruch 6 angegeben.

Da beim erfindungsgemäßen Verfahren vor der Dezimierung der Videobilder auf die verringerte Darstellungsgröße eine Tiefpaßfilterung durchgeführt wird, wird durch die Dezimierung außer dem beabsichtigten Bildschärfeverlust kein weiterer Störeffekt eingeführt. Die Tiefpaßfilterung wirkt auf die zu dezimierenden Bilddaten, wird aber tatsächlich vor der inversen diskreten Kosinustransformation (IDCT) durchgeführt. Da die Eingangswerte der IDCT im Frequenzbereich vorliegen, wird die Filterung durch Nullsetzen beziehungsweise Streichen der den höherfrequenten Anteilen zuordenbaren Eingangswerte der IDCT ideal durchgeführt. Zweckmäßigerweise werden am Ausgang der IDCT nur diejenigen Werte berechnet, die im dezimierten Bild weiterverarbeitet und angezeigt werden. Die Berechnung der IDCT vereinfacht sich dadurch. Es sind wesentlich weniger Multiplikationen und Additionen durchzuführen als bei einer vollständigen IDCT. Die Menge der zu streichenden Eingangswerte der IDCT hängt von der gewünschten Wiedergabequalität und der verfügbaren Rechenleistung ab. Bei einer Dezimierung der Anzahl der Bildpunkte des ausgangsseitigen Videobilds um den Faktor 1/4 werden beispielsweise 3/4 der Eingangsdatenwerte auf Null gesetzt bzw. nur 1/4 der vorliegenden Eingangsdatenwerte sind durch die IDCT zu verarbeiten. Entsprechendes gilt für die Koeffizienten der IDCT. Die Anzahl der Multiplikationen und Additionen liegt dann unter 1/4 derjenigen Anzahl für eine auf die vollständigen Eingangsdaten ausgeführte IDCT.

Die Einrichtung zur Berechnung der IDCT kann in bezug auf ihre Rechenleistung somit wahlweise sowohl ein Vollbild decodieren als auch gleichzeitig vier dezimierte gleichgroße Bilder für gleichzeitige Darstellung am Bildschirm (sogenannte Bild-im-Bild-Einblendung). Vorteilhafterweise genügt demnach eine einzige IDCT-Verarbeitungseinrichtung für wahlweise Vollbildverarbeitung oder gleichzeitige Darstellung von mehreren gleichgroßen Bildern. Bei Realisierung der IDCT-Verarbeitungseinrichtung mittels einer softwaregesteuerten Prozessorarchitektur ist die Umschaltung von Vollbildverarbeitung auf Mehrbildverarbeitung problemlos ohne wesentlichen zusätzlichen Verarbeitungsaufwand durchführbar.

Darüber hinaus ist auch der Bildspeicher wahlweise entweder für die Zwischenspeicherung der Vollbildausgangsdaten oder für die Zwischenspeicherung von mehreren gleichzeitig darzustellenden gleichgroßen dezimierten Bildern verwendbar. Bei Verwendung von standardgemäßen Bildspeichern ist eine Speichergröße von 16 Mbit ausreichend, wenn eine für übliches digitales Fernsehen (MPEG2 Mainlevel at Main Profile) angestrebte Auflösung vorliegt. Gegebenenfalls kann auch ein weiterer Halbbildspeicher zur Umsetzung von Vollbilddarstellung auf Halbbilddarstellung mit Zeilensprung in der Speichereinrichtung von 16 Mbit angeordnet werden sowie ein Pufferspeicher für die zeitliche Pufferung der im allgemeinen asynchron vorliegenden Videodaten verschiedener Programme, um die synchrone gleichzeitige Darstellung am Bildschirm zu ermöglichen.

Nachfolgend wird die Erfindung anhand des in der Zeichnung dargestellten Ausführungsbeispiels näher erläutert.

In der Figur ist ein Blockschaltbild für eine Decodierung von mehreren Videodatenströmen gezeigt, die jeweils eine Folge von Bildern enthalten, die gleichzeitig sichtbar mit gleicher Größe an einem Bildschirm dargestellt werden sollen. Prinzipiell ist die Erfindung auf z. B. n = 2, 4, 9, 16... gleichzeitig darzustellende Bilder anwendbar, sofern die Bilder jeweils gleiche Größe aufweisen. Der in der Figur gezeigte Fall berücksichtigt zur Vereinfachung den Fall von n = 4 gleichzeitig darzustellenden Bildern.

Der erste codierte Videodatenstrom V1 wird in einen digitalen Vorprozessor 10 eingespeist. Dieser enthält einen Pufferspeicher 11, um die bekanntlich gemäß dem MPEG2-Standard nicht mit konstanter Datenmenge pro Bild ankommenden digitalen Videodaten zu puffern, so daß die Daten dann bildweise als I-/P-/B-Bilder vorliegen, so daß sie decodiert werden können. In der nachgeschalteten Einrichtung 12 zur Bitstromdecodierung wird unter anderem die Bewegungsinformation aus den Eingangsdaten abgetrennt und zur weiter unten beschriebenen Prädiktionseinrichtung weitergeleitet. Außerdem wird in der Bitstromdecodierungseinrichtung auch eine Variable-Längen-Decodierung und Lauflängendecodierung durchgeführt. Nachfolgend wird eine (nicht dargestellte) Dequantisierung durchgeführt. Die derart vorverarbeiteten Daten werden dann einer Einrichtung 13 zur Bildung einer inversen diskreten Kosinustransformation (IDCT) zugeführt. Am Ausgang der IDCT-Einrichtung 13 liegen die transformationsdecodierten Bilder vor. In einer Bildsyntheseeinrichtung 14 werden die Bilder mittels einer bewegungskompensierten Prädiktion im Hinblick auf die enthaltene Bewegung decodiert. I-Bilder, die nur innerhalb des Bildes DCT-codiert sind, nicht aber selbst der Prädiktion unterliegen, werden direkt in eine Speichereinrichtung 15 eingeschrieben. P- und B-Bilder, die bewegungscodiert sind, werden der bewegungskompensierten Prädiktion in der Einrichtung 14 unterzogen. Hierzu werden die erforderlichen bereits vorliegenden Daten, die die Referenzwerte für die Prädiktion bilden, z. B. bereits decodierte I- oder P-Bilder, aus dem Speicher 15 ausgelesen. In einer Einrichtung 16 zur Bewegungskompensation wird zusätzlich die bei der Bitstromdecodierung in der Einrichtung 12 ermittelte Bewegungsinformation berücksichtigt. Die derart aufbearbeiteten und anschließend in der Speichereinrichtung 15 zwischengespeicherten Bilder stehen dann zur Weiterverarbeitung und Darstellung an einem Bildschirm 17 zur Verfügung.

Die in der Figur gezeigte Einrichtung ist sowohl zur Verarbeitung eines einzigen Vollbildes als auch zur Verarbeitung von vier gleichzeitig an einem Bildschirm darstellbaren gleichgroßen bewegten Bildern geeignet. Hierzu kann am Anschluß 20 in die IDCT-Einrichtung 13 der Videodatenstrom für ein Vollbild V0 eingespeist werden. Für die alternative gleichzeitige Darstellung von vier dezimierten Bildern ist vierfach je ein Vorprozessor 10a...10d vorgesehen, in die jeweils eines der Videodatensignale V1...V4 eingespeist wird.

Bei der gleichzeitigen Darstellung von vier Bildern werden die dekomprimierten Bilddaten im Speicher 15 dezimiert gespeichert. Hierzu wird nur 1/4 der Anzahl der Bildpunkte eines Bildes gegenüber einer Vollbildauflösung gespeichert. Von der IDCT-Einrichtung 13 braucht folglich nur 1/4 der für die Vollbildauflösung erforderlichen Bildpunkte berechnet zu werden. Um durch diese Dezimierung keine Störeffekte einzubringen, ist es erforderlich, daß vor der Dezimierung eine Filterung durchgeführt wird, die in bezug auf das zu dezimierende Signal (örtlichen) Tiefpaßcharakter hat. Zweckmäßigerweise wird diese Filterung derart durchgeführt, daß die den hochfrequenten Signalanteilen zuordenbaren Eingangswerte der IDCT auf Null gesetzt werden. Die Eingangswerte der IDCT-Einrichtung 13 liegen im Frequenzbereich vor, so daß das Nullsetzen der die hochfrequenten Anteile darstellenden Abtastwerte eine ideale Tiefpaßfilterung für das Ausgangssignal der IDCT-Berechnung bewirkt. Durch das Nullsetzen von 3/4 der Eingangswerte der IDCT, die den hochfrequenten Signalanteilen entsprechen, und den Abgriff von nur 1/4 der Ausgangswerte, die das dezimierte, weiter zu verarbeitende Bild bilden, wird die Berechnung der IDCT wesentlich vereinfacht.

Im allgemeinen wird bei n darzustellenden Bildern nur 1/n der Bildpunkte berechnet. Die Anzahl der in die IDCT einzuspeisenden Eingangsdatenwerte und somit auch die Anzahl der Koeffizienten der IDCT hängt von der gewünschten Wiedergabequalität und der verfügbaren Rechenleistung ab. Die Anzahl der Eingangsdatenwerte beeinflußt dabei die Tiefpaßfilterwirkung, die für das Ausgangsbild erforderlich ist. Dies ist insbesondere an der Erfüllung von theoretischen Grenzwerten wie dem Abtasttheoren zu orientieren.

Die Wirkung der Berechnung ist durch die nachfolgende Formelberechnung in Matrixschreibweise für eine inverse DCT gezeigt. X ist dabei die zu berechnende, dezimierte Ausgangsmatrix, Y die Eingangsmatrix, bei der die dem höherfrequenten Signalanteilen zugeordneten Werte bereits auf Null gesetzt sind, und C die Koeffizientenmatrix der inversen DCT. Es gilt:

$$X = \begin{pmatrix} X_{11} & 0 & X_{13} & 0 & X_{15} & 0 & X_{17} & 0 \\ 0 & 0 & 0 & 0 & 0 & 0 & 0 & 0 \\ X_{31} & 0 & X_{33} & 0 & X_{35} & 0 & X_{37} & 0 \\ 0 & 0 & 0 & 0 & 0 & 0 & 0 & 0 \\ X_{51} & 0 & X_{53} & 0 & X_{55} & 0 & X_{57} & 0 \\ 0 & 0 & 0 & 0 & 0 & 0 & 0 & 0 \\ X_{71} & 0 & X_{73} & 0 & X_{75} & 0 & X_{77} & 0 \\ 0 & 0 & 0 & 0 & 0 & 0 & 0 & 0 \end{pmatrix} = C^T \cdot Y \cdot C =$$

$$= \begin{pmatrix} a & d & b & e & a & f & c & g \\ a & e & c & -g & -a & -d & -b & -f \\ a & f & -c & -d & -a & g & b & e \\ a & g & -b & -f & a & e & -c & -d \\ a & -g & -b & f & a & -e & -c & d \\ a & -f & -c & d & -a & -g & b & -e \\ a & -e & c & g & -a & d & -b & f \\ a & -d & b & e & a & -f & c & -g \end{pmatrix} \cdot \begin{pmatrix} Y_{11} & Y_{12} & Y_{13} & Y_{14} & 0 & 0 & 0 & 0 \\ Y_{21} & Y_{22} & Y_{23} & Y_{24} & 0 & 0 & 0 & 0 \\ Y_{31} & Y_{32} & Y_{33} & Y_{34} & 0 & 0 & 0 & 0 \\ Y_{41} & Y_{42} & Y_{43} & Y_{44} & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \\ 0 & 0 & 0 & 0 & 0 & 0 & 0 & 0 \end{pmatrix} \cdot \begin{pmatrix} a & a & a & a & a & a & a & a \\ d & e & f & g & -g & -f & -e & -d \\ b & c & -c & -b & -b & -c & c & b \\ e & -g & -d & -f & f & d & g & e \\ a & -a & -a & a & a & -a & -a & a \\ f & -d & g & e & -e & -g & d & -f \\ c & -b & b & -c & -c & b & -b & c \\ g & -f & e & -d & d & -e & f & -g \end{pmatrix} ;$$

Es ergibt sich:

$$\begin{pmatrix} X_{11} & X_{13} & X_{15} & X_{17} \\ X_{31} & X_{33} & X_{35} & X_{37} \\ X_{51} & X_{53} & X_{55} & X_{57} \\ X_{71} & X_{73} & X_{75} & X_{77} \end{pmatrix} = \begin{pmatrix} a & d & b & e \\ a & f & -c & -d \\ a & -g & -b & f \\ a & -e & c & g \end{pmatrix} \cdot \begin{pmatrix} Y_{11} & Y_{12} & Y_{13} & Y_{14} \\ Y_{21} & Y_{22} & Y_{23} & Y_{24} \\ Y_{31} & Y_{32} & Y_{33} & Y_{34} \\ Y_{41} & Y_{42} & Y_{43} & Y_{44} \end{pmatrix} \cdot \begin{pmatrix} a & a & a & a \\ d & f & -g & -e \\ b & -c & -b & c \\ e & -d & f & g \end{pmatrix} ,$$

mit

$$a = \cos\frac{\pi}{4}, b = \sin\frac{\pi}{8}, c = \sin\frac{\pi}{8}, d = \cos\frac{\pi}{16},$$

$$e = \cos\frac{3\pi}{16}, f = \sin\frac{3\pi}{16}, g = \sin\frac{\pi}{16}$$

Im gezeigten Beispiel wird bei der Ausgangsmatrix X nur ein Viertel der Bildpunkte verwendet, um die Dezimierung auf ein Viertel der Bildgröße zu erreichen. Zur Tiefpaßfilterung wird bei den Eingangswerten nur ein Viertel der Werte verwendet, nämlich die den niedrigen Frequenzen zuordenbaren Werte, das heißt der linke obere Quadrant der Eingangsmatrix Y. Dadurch wird die Berechnung der IDCT wesentlich vereinfacht. Es ist nur die Hälfte der Multiplikationen und Additionen der IDCT pro Bildpunkt notwendig.

Die Einrichtung 13 weist somit eine Verarbeitungsleistung auf, die geeignet ist, entweder ein Vollbild mit der IDCT zu transformieren oder vier auf ein Viertel der ursprünglichen Bildpunktanzahl dezimierte Bilder für gleichzeitige Darstellung. Der für die Vollbildverarbeitung erforderliche Schaltungsaufwand kann demnach auch für die gleichzeitige Darstellung mehrerer Bilder verwendet werden. Das Prinzip ist ohne weiteres auf eine beliebige Anzahl gleichzeitig darzustellender, gleich großer Bilder anwendbar. Bei Realisierung der IDCT in einer Prozessorarchitektur kann die Umschaltung der Verarbeitungsvorschriften der IDCT für die Vollbildverarbeitung auf die Verarbeitung dezimierter Bilder durch entsprechende Software in einfacher Weise ausgeführt werden.

Im allgemeinen liegen die Videodatenströme V1...V4 in bezug auf die jeweiligen Bildrahmen asynchron vor. Es wird deshalb eine der Bildfolgen als zeitliche Referenz betrachtet, während die anderen drei Bildfolgen mittels Pufferung verzögert werden, bis Synchronisation vorliegt. Wird beispielsweise die Bildfolge des Videodatenstroms V1 als Referenz angenommen, sind die jeweiligen Pufferspeicher 11 der anderen Vorprozessoren (von denen nur der Vorprozessor 10d dargestellt ist) entsprechend groß zu dimensionieren. Alternativ dazu können drei Pufferspeicher ausgangsseitig in der Speichereinrichtung 15 angeordnet werden. Dies hat den Vorteil, das dort nur die dezimierte Bildgröße gepuffert werden muß.

Darüber hinaus kann in der Speichereinrichtung 15 auch ein Halbbildspeicher vorgesehen werden, um eine Anpassung der von der IDCT-Einrichtung 13 erzeugten Vollbilder auf zeilenverkämmte Halbbilder durchzuführen, so daß die Ansteuerung von standardgemäßen Bildschirmen 17 für halbbildweise Zeilsprungdarstellung ermöglicht wird. Die praktische Ausführung des Bildspeichers 15 für den dargestellten Fall einer gleichzeitigen Darstellung von vier Videobildern erfordert einschließlich der drei Pufferspeicher zur Herstellung der Synchronisation und eines Halbbildspeichers für Vollbild/Halbbild-Umsetzung eine Speicherkapazität von 16 Mbit. Damit ist die Verwendung eines standardgemäßen Speichers möglich.

**Patentansprüche**

1. Verfahren zur Dekodierung eines Videodatenstroms, dessen Videodaten Bilder repräsentieren, bei dem:

   - der Videodatenstrom (V1) mit einer Transformationskodierung kodiert ist,
   - die Videodaten des Videodatenstroms mittels einer Transformationsdekodierung dekodiert werden,
   - die dekodierten Videodaten bildweise in einer Speichereinrichtung (15) mit einer im Vergleich zu den in den eingangsseitigen Videodaten enthaltenen Bildern verringerten Bildpunktanzahl zwischengespeichert werden,
   - der Videodatenstrom vor der Zwischenspeicherung mit einer in bezug auf die im Videodatenstrom enthaltene Bildinformation wirkenden Tiefpaßcharakteristik gefiltert wird, indem nur solche Eingangsdatenwerte der Transformationsdekodierung zugeführt werden, die niedrigfrequenten Anteilen der in den eingangsseitigen Bildern enthaltenen Bildinformation zuordenbar sind.

2. Verfahren nach Anspruch 1,
   **dadurch gekennzeichnet**, daß
   die Videodaten des Videodatenstroms mit einer inversen diskreten Kosinustransformation dekodiert werden.

3. Verfahren nach Anspruch 2,
   **dadurch gekennzeichnet**, daß
   nur die in den ausgangsseitigen Bildern der dekodierten Videodaten enthaltenen, darzustellenden Bildpunkte durch die inverse diskrete Kosinustransformation berechnet werden.

4. Verfahren nach einem der Ansprüche 1 bis 3,
   **dadurch gekennzeichnet**, daß
   der Videodatenstrom (V1) eine erste Anzahl von einem Bild zuordenbaren Datenwerten enthält und der Transformationsdekodierung eine zweite, geringere Anzahl von Datenwerten zugeführt wird.

5. Verfahren nach einem der Ansprüche 1 bis 4,
   **dadurch gekennzeichnet**, daß
   n kodierte Videodatenströme (V1, ..., V4) vorgesehen sind, daß die in den kodierten Videodaten der Videodatenströme enthaltenen Bilder jeweils eine Anzahl von Bildpunkten enthalten, daß zur Verringerung der Anzahl der Bildpunkte in jedem Bild der dekodierten Videodaten durch die inverse diskrete Kosinustransformation 1/n der Anzahl der Bildpunkte für die Bilder in den dekodierten Videodaten ermittelt wird und zwischengespeichert wird, daß eine geringere Anzahl der das eingangsseitige Bild repräsentierenden Eingangsdatenwerte der inversen diskreten Kosinustransformation zugeführt wird und daß für die Koeffizienten der Transformation eine entsprechend geringere Anzahl der Koeffizienten einer Transformation, die die vollständige Anzahl von Eingangswerten auf die vollständige Anzahl von Ausgangswerten abbildet, verwendet wird.

6. Schaltungsanordnung zur Durchführung des Verfahrens nach einem der Ansprüche 1 bis 5,
   **dadurch gekennzeichnet**, daß
   ein Eingangspufferspeicher (11) vorgesehen ist, dem der Videodatenstrom (V1) zuführbar ist, eine Einrichtung (13) zur Berechnung einer inversen diskreten Kosinustransformation, die dem Eingangsdatenpuffer (11) nachgeschaltet ist und der für jedes Bild eine verringerte Anzahl der das eingangsseitige Bild repräsentierenden Eingangsdatenwerte zuführbar ist und durch die daraus ein Bild mit einer im Vergleich zu dem in den eingangsseitigen Videodaten enthaltenen Bild verringerten Bildpunktanzahl erzeugbar ist, und eine Speichereinrichtung (15), in der die von der Einrichtung (13) für die inversen diskreten Kosinustransformation erzeugten Bilder bildweise zwischenspeicherbar sind.

FIG.